# EUROPÄISCHE PATENTSCHRIFT

(11) **EP 0 525 294 B1**
(45) Veröffentlichungstag und Bekanntmachung des Hinweises auf die Patenterteilung: **04.01.1995**
(21) Anmeldenummer: 92104762.7
(22) Anmeldetag: 19.03.1992
(51) Int. Cl.: F01K 17/02, F22D 11/06, F24D 10/00, F24D 11/00

(54) **Verfahren und Vorrichtung zur Rückführung des Ferndampfleitungskondensats bei Dampf-Wärmeübergabestationen**
Process and device for returning condensate of a long-distance steam line in a steam heating plant
Procédé et dispositif pour retourner les condensats d'une conduite de vapeur à grande distance dans une installation de chauffage à vapeur

(30) Priorität: 30.07.1991 DE 4125170
(43) Veröffentlichungstag der Anmeldung: 03.02.1993
(73) Patentinhaber: Helmut Bälz GmbH, D-74076 Heilbronn (DE)
(72) Erfinder: Bälz, Uwe, Dr., W-7100 Heilbronn (DE)
(74) Vertreter: Rüger, Rudolf, Dr.-Ing.

(56) Entgegenhaltungen:
- DE-U- 8 703 599
- FR-A- 2 660 988

## Beschreibung

Die Erfindung betrifft ein Verfahren zur Rückführung des Ferndampfleitungsentwässerungskondensats (FDL-Kondensats) bei Dampf-Wärmeübergabestation; mit einem auf seiner Primärseite dampfseitig an eine Ferndampfleitung angeschlossenen und kondensatseitig geregelten Wärmetauscher, dem kondensatseitig eine das in dem Wärmetauscher anfallende und das Ferndampfleitungskondensat rückfördernde Kondensatpumpe zugeordnet ist.

Außerdem bezieht sich die Erfindung auf eine Dampf-Wärmeübergabestation mit einem auf seiner Primärseite an eine Ferndampfleitung angeschlossenen kondensatseitig geregelten Wärmetauscher, dessen Kondensatseite über zumindest ein Regelventil und eine Kondensatpumpe mit einer Kondensatrückführleitung verbunden ist, sowie mit einer Zuleitungseinrichtung zum Zuführen von in der Ferndampfleitung anfallendem Ferndampfleitungskondensat zu der Saugseite der Kondensatpumpe.

Ein derartiges Verfahren und eine derartige Dampf-Wärmeübergabestation sind z.B. aus DE-U-87 03 599 bekannt.

Weiter ist es bekannt, in Dampf-Wärmeübergabestationen, bspw. stehende Dampf-Wasser-Wärmetauscher oder -übertrager mit kondensatseitiger Regelung der Sekundär-Vorlauftemperatur zu verwenden. Der Wärmetauscher ist dabei auf seiner Primärseite dampfseitig über entsprechende Sicherheitseinrichtungen etc. an eine Ferndampfleitung angeschlossen und kondensatseitig mit einer Kondensatrückführleitung über ein Regelventil verbunden, das eine Anstauregelung von 0 bis 100% erlaubt. Das in dem Wärmetauscher anfallende Kondensat wird in die Kondensatrückführleitung, d.h. in das Kondensatnetz zurückgespeist, wozu, abhängig von den gegebenen Bedingungen, in der Regel zwei prinzipielle Vorgehensweisen gebräuchlich sind:
Die Kondensatrückführung erfolgt bei der einen Vorgehensweise über einen offenen oder geschlossenen Kondensatbehälter, wobei bei Verwendung eines offenen Kondensatbehälters das Kondensat aus diesem mittels einer Kondensatpumpe zurückbefördert wird, die in Abhängigkeit von dem Kondensatniveau in dem Kondensatbehälter gesteuert ist. Nachteilig ist dabei der unvermeidbare Luftzutritt zu dem Kondensat. Mit Luftabschluß arbeitet demgegenüber ein geschlossener Kondensatsammelbehälter, der über ein Ventil ohne Hilfsenergie aus der Ferndampfleitung bedampft wird, wobei über dieses Ventil ebenfalls eine niveauabhängig gesteuerte Kondensatrückführung erfolgt. Um eine sichere Kondensatrückspeisung zu gewährleisten, muß aber der minimale Dampfdruck um mindestens 0,1 bis 0,4 barü höher als der Kondensatgegendruck sein. Dies ist nicht in allen Einsatzfällen gewährleistet.

Bei der anderen Vorgehensweise wird auf einen Kondensatsammelbehälter verzichtet,und die Rückspeisung des Kondensats erfolgt über eine Kondensatpumpe (Druckerhöhungspumpe), die dem Wärmetauscher kondensatseitig unmittelbar nachgeschaltet ist. Solche Anlagen werden oftmals beim Vorliegen sehr niedriger Dampfdrücke in Verbindung mit einer sogenannten Thermo-Niveau-Entgasung, welche das sich zwischen der Grenzschicht Dampf-Kondensat ansammelnde Gas automatisch abläßt, ausgeführt. In Fällen, in denen der minimale Dampfdruck größer ist als der maximale Kondensatgegendruck, kann das Kondensat auch ohne Druckerhöhungspumpe in das Kondensatznetz rückgespeist werden.

Zusätzlich zu dem auf der Primärseite des Wärmetauschers in der Dampf-Wärmeübergabestation anfallenden Kondensat tritt jedoch auch in der Ferndampfleitung selbst Kondensat auf, das zur Vermeidung von Betriebsstörungen als sogenanntes Ferndampfentwässerungskondensat regelmäßig abgeführt werden muß. Bei Dampf-Wärmeübergabestationen, die mit einem Kondensatsammelbehälter arbeiten, kann dieses Ferndampfentwässerungskondensat unmittelbar in den Kondensatsammelbehälter eingeleitet und gemeinsam mit dem in dem Wärmetauscher anfallenden Kondensat in das Kondensatnetz zurückgefördert werden. In Fällen, in denen der minimale Dampfdruck kleiner als der maximale Kondensatgegendruck ist, wird das Ferndampfentwässerungskondensat auch gelegentlich über einen freien Auslauf abgeleitet, was naturgemäß unbefriedigend ist. Ist dagegen der minimale Dampfdruck größer als der maximale Kondensatgegendruck, so daß auf eine Druckerhöhungspumpe für das Kondensat des Wärmetauschers, wie erwähnt, verzichtet werden kann, so wird gelegentlich derart vorgegangen, daß das Ferndampfentwässerungskondensat mittels Dampfdruck über einen Kondensatkühler direkt in die gemeinsame Kondensatrückführleitung gedrückt wird.

Bei Dampf-Wärmeübergabestationen, bei denen dem Wärmetauscher unmittelbar eine Kondensatpumpe nachgeschaltet ist, ist es auch bekannt, das Ferndampfentwässerungskondensat in den Kondensatboden des stehenden Wärmetauschers einzuleiten, es dort abzukühlen und dann zusammen mit dem in dem Wärmetauscher anfallenden Kondensat mittels der einen Kondensatpumpe in die Kondensatrückführleitung zurückzudrücken. Dabei können sich aber unter bestimmten Betriebsbedingungen prinzipbedingte Schwierigkeiten ergeben:

Wird von dem Wärmetauscher sekundärseitig keine Wärme abgenommen, so fällt in dem Wärmetauscher selbst primärseitig kein Kondensat an. Das kondensatseitige Regelventil ist geschlossen, und die Kondensatpumpe ist stillgesetzt. Unabhängig von diesem Null-Wärmebedarf am Wärmetauscher tritt in der Ferndampfleitung aber Ferndampfentwässerungskondensat auf, das bei stehender Kondensatpumpe und geschlossenem kondensatseitigem Regelventil nicht abegführt werden kann. Dies bedeutet, daß bei null Wärmebedarf am Wärmetauscher auch keine Entwässerung der Ferndampfleitung möglich ist, was bei länger andauerndem Null-Wärmebedarf zu Betriebsstörungen Anlaß geben kann. Würde aber zur Abführung des Ferndampfkondensats die Kondensatpumpe bei geöffnetem kondensatseitigem Regelventil trotz fehlender Wärmeabnahme auf der Sekundärseite des Wärmetauschers vorübergehend eingeschaltet, so würde Dampf in den Wärmetauscher einströmen, mit der Folge, daß dieser überhitzt wird. Eine vorübergehende Absperrung der Dampfzuleitung zu dem Wärmetauscher brächte hier deshalb keine Abhilfe, weil dann die Gefahr bestünde, daß die Kondensatpumpe in dem Wärmetauscher primärseitig einen Unterdruck erzeugt, der dazu führt, daß der Wärmetauscher Luft und damit Luftsauerstoff schnüffelt.

Außerdem kann bei einer solchen Einleitung des Ferndampfentwässerungskondensats in den Kondensatboden des stehenden Wärmetauschers gelegentlich nicht vermieden werden, daß die Kondensatpumpe auch Kondensat aus der Ferndampfleitung absaugt, was unerwünscht ist. Davon abgesehen besteht die grundsätzliche Problematik darin, daß beim Auftreten eines Schadens an dem Kondensatableiter in der Verbindungsleitung zwischen der Ferndampfleitung und dem Kondensatboden des Wärmetauschers Dampf unmittelbar auf dessen Kondensatseite durchschlägt und damit auf die Saugseite der Kondensatpumpe kommt. Dies muß unter allen Umständen vermieden werden.

Die in dem Kondensatboden erfolgende Beimischung des Ferndampfentwässerungskondensats zu dem in dem Wärmetauscher anfallenden Kondensat bedeutet außerdem, daß eine getrennte Erfassung der anfallenden Durchflußmengen der beiden Kondensatarten nicht mehr ohne weiteres möglich ist. Die dem Verbraucher in Rechnung gestellte Wärmemenge wird aber häufig aus der Temperatur und der Menge des in der Dampf-Wärmeübergabestation in das Kondensatnetz zurückgespeisten Kondensats berechnet. Die automatisch mitgemessene Menge des Ferndampfentwässerungskondensats verfälscht die Berechnungsgrundlage.

Aufgabe der Erfindung ist es deshalb, einen Weg zu weisen, der es gestattet, in einer Dampf-Wärmeübergabestation mit einem auf seiner Primärseite dampfseitig an eine Ferndampfleitung angeschlossenen und kondensatseitig geregelten Wärmetauscher,dem kondensatseitig eine Kondensatpumpe zugeordnet ist, das in dem Wärmetauscher anfallende Kondensat und das Ferndampfentwässerungskondensat jeweils bedarfsgemäß in das Kondensatnetz zurückzuspeisen, und zwar ohne daß dazu der Aufwand einer weiteren Kondensatpumpe und ohne daß ein Kondensatbehälter erforderlich wären oder die vorgenannten Nachteile in Kauf genommen zu werden brauchten.

Zur Lösung dieser Aufgabe wird bei dem eingangs genannten Verfahren erfindungsgemäß derart vorgegangen, daß das Ferndampfleitungsentwässerungskondensat der Kondensatpumpe saugseitig an einer zwischen dem Wärmetauscher und der Kondensatpumpe liegenden Stelle gesteuert zeitweilig zugeleitet wird und daß zumindest bei fehlender sekundärseitiger Wärmeabnahme von dem Wärmetauscher die Zuleitung von Ferndampfentwässerungskondensat bei von der Kondensatpumpe abgesperrter Kondensatseite des Wärmetauschers erfolgt.

Während der Zeiträume, während der eine Ferndampfleitungsentwässerung nicht erforderlich ist, wird mittels der Kondensatpumpe lediglich das in dem Wärmetauscher anfallende Kondensat in das Kondensatnetz zurückgespeist. Tritt dabei Null-Wärmebedarf auf der Sekundärseite des Wärmetauschers auf, so schließt das kondensatseitige Regelventil,mit der Folge, daß die Wärmeübertragungsfläche des Wärmetauschers 100%ig mit Kondensat überflutet wird und keine Wärmeübertragung mehr stattfindet; die Kondensatpumpe wird stillgesetzt.

Muß jedoch eine Ferndampfleitungsentwässerung vorgenommen werden, obwohl an dem Wärmetauscher keine Wärme abgenommen wird und dessen Wärmeübertragungsfläche deshalb vollständig überflutet ist, so wird der Wärmetauscher kondensatseitig gegen die Kondensatpumpe abgesperrt. Über die Kondensatpumpe wird nunmehr lediglich das jetzt zugeleitete Ferndampfentwässerungskondensat in das Kondensatnetz zurückgespeist, bis die Ferndampfleitung entwässert ist. Während dieser Zeit ist ein Abströmen von Kondensat aus dem Wärmeübetrager ausgeschlossen, so daß an diesem auch keine Störungen durch Überhitzungen etc. auftreten können. Sowie die Ferndampfleitung entwässert ist, wird die Kondensatpumpe stillgesetzt und die Betriebsbereitschaft für eine nachfolgende kondensatseitige Regelung des Wärmetauschers bei an diesem wieder auftretendem Wärmeverbrauch hergestellt.

Während der Rückförderung von in dem Wärmetauscher anfallendem Kondensat ist die Zuleitung von Ferndampfentwässerungskondensat zu der Saugseite der Kondensatpumpe in der Regel unterbrochen, wobei das Ferndampfentwässerungskondensat vorübergehend zeitweilig gespeichert wird, bevor es bspw. niveauabhängig der Saugseite der Kondensatpumpe zugeleitet wird. Soll eine Entwässerung der Ferndampfleitung erfolgen, während die Kondensatpumpe in dem Wärmetauscher anfallendes Kondensat rückfördert, d.h. während das kondensatseitige Regelventil zumindest teilweise geöffnet ist, so wird das Ferndampfentwässerungskondensat einfach zusätzlich der Saugseite der Kondensatpumpe zugeleitet, die dann beide Kondensatmengen gleichzeitig fördert.

Um Dampfschläge zu vermeiden, ist es zweckmäßig, daß das Ferndampfleitungsentwässerungskondensat vor der Zuleitung zu der Saugseite der Kondensatpumpe gekühlt wird. Dabei kann zur Energieersparnis von dem Ferndampfleitungsentwässerungskondensat Wärme unmittelbar auf den sekundärseitigen Rücklauf des Wärmetauschers übertragen und damit ausgenutzt werden.

In einer Fortbildung des neuen Verfahrens kann schließlich noch so vorgegangen werden, daß auf der Primärseite des Wärmetauschers die Druckdifferenz zwischen dem Dampfdruck und dem Kondensatgegendruck gemessen wird und daß bei positiver Druckdifferenz die Rückförderung des Kondensats mittels des Dampfdruckes bei unwirksamer, d.h. abgeschalteter Kondensatpumpe erfolgt.

Eine zur Rückführung des Ferndampfleitungsentwässerungskondensats nach dem neuen Verfahren eingerichtete Dampf-Wärmeübergabestation mit den eingangs genannten Merkmalen ist erfindungsgemäß dadurch gekennzeichnet, daß die Kondensatpumpe saugseitig mit der Kondensatseite des Wärmetauschers über gesteuerte erste Absperrmittel verbunden ist, daß die Zuleitungseinrichtung für das Ferndampfleitungsentwässerungskondensat zwischen den ersten Absperrmitteln und der Kondensatpumpe auf deren Saugseite mündet und gesteuerte zweite Absperrmittel enthält, und daß die ersten und die zweiten Absperrmittel mit einer Steuereinrichtung verbunden sind, durch die zumindest bei fehlender sekundärer Wärmeabnahme von dem Wärmetauscher die ersten Absperrmittel bei geöffneten zweiten Absperrmitteln geschlossen gehalten sind.

Die Erfindung bringt eine Reihe von Vorteilen mit sich, die u.a. darin zu sehen sind, daß sie keine Kondensatsammelbehälter mit entsprechender Niveausteuerung benötigt, wodurch sich eine wesentliche Absenkung der Investitionskosten ergibt. Da die Dampf-Wärmeübergabestation primärseitig in einem insgesamt geschlossenen System arbeitet, kann auch kein Sauerstoff in das Kondensatnetz gelangen und dort Anlaß zu Korrosionserscheinungen geben. Daneben ist das Auftreten von Dampf-Kondensat-Schlägen in der Kondensatschiene vermieden, während gleichzeitig keine Ausdampfverluste auftreten und sich die ganze Anlage durch einen vergleichsweise geringen Raumbedarf auszeichnet. Schließlich kann das in dem Wärmetauscher anfallende und für die Berechnung des Wärmeverbrauchs maßgebende Kondensat unabhängig von dem Ferndampfleitungsentwässerungskondensat erfaßt werden, ohne daß dazu größere konstruktive Aufwendungen erforderlich wären.

Weitere Merkmale der neuen Dampf-Wärmeübergabestation sind Gegenstand von Unteransprüchen.

In der Zeichnung sind zwei Ausführungsbeispiele des Gegenstandes der Erfindung dargestellt. Es zeigen:
- Fig. 1: eine Wärme-Dampfübergabestation mit einer Ferndampfleitungsentwässerungskondensat-Rückleitung gemäß der Erfindung, in schematischer Darstellung, und
- Fig. 2: die Dampf-Wärmeübergabestation nach Fig. 1, in einer abgewandelten Ausführungsform und in einer entsprechenden Darstellung.

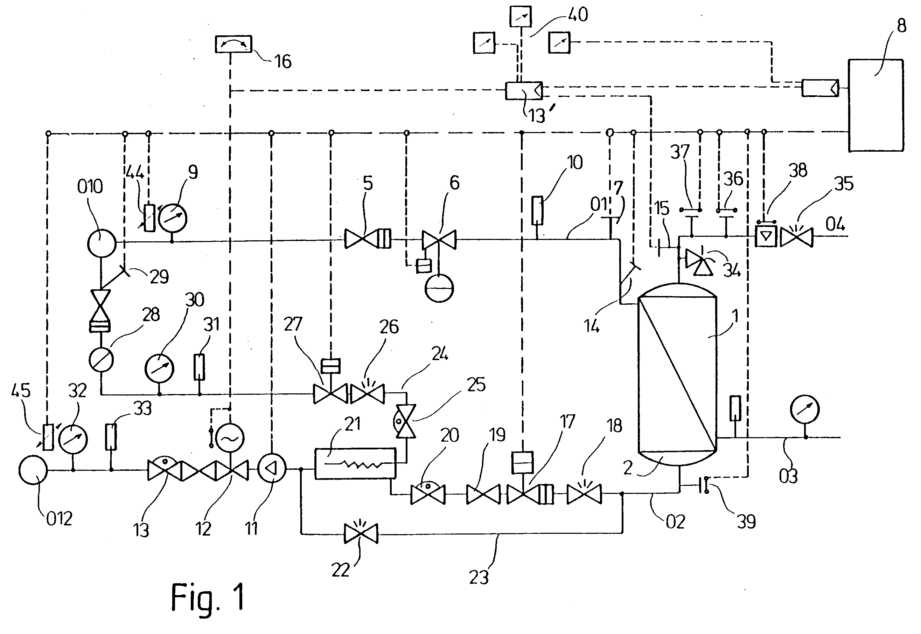

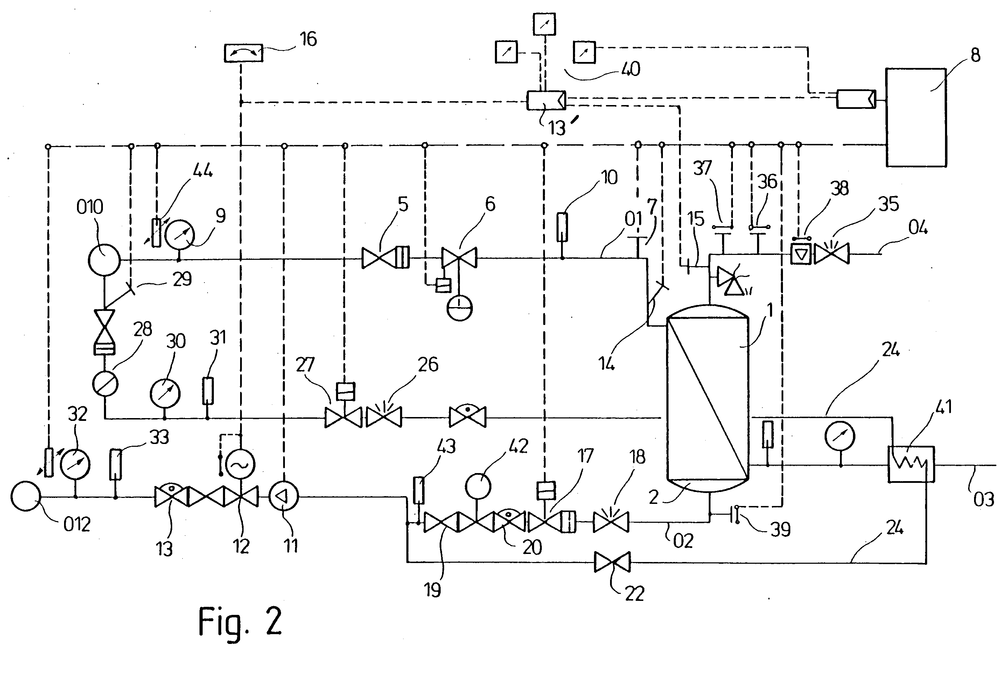

Die in den Fig. 1,2 dargestellte Dampf-Wärmeübergabestation enthält jeweils mindestens einen stehenden Wärmetauscher 1, der auf seiner Primärseite über eine Dampfleitung 01 an eine Ferndampfleitung 010 angeschlossen ist und dessen Kondensatboden 2 über eine Kondensatleitung 02 mit einer Kondensatrückführleitung oder Kondensatschiene 012 verbunden ist. Die sekundärseitige Vorlaufleitung des Wärmetauschers 1 ist mit 04 bezeichnet, während die sekundärseitige Rücklaufleitung bei 03 angedeutet ist. Der dazwischenliegende Wärmeverbraucher ist nicht weiter dargestellt.

In der Dampfleitung 01 zu dem Wärmetauscher 1 liegen die üblichen Sicherheitsarmaturen in Gestalt eines mit einem Schmutzfänger versehenen Handabsperrventils 5 und eines Druckhaltungs-Mehrzweckventiles 6 mit elektrischem Schnellschluß, das gemeinsam mit einem Temperatur-Ferngeber 7 in der Dampfleitung 01 an eine elektrische Steuer- und Überwachungseinrichtung 8 angeschlossen ist, die beim Auftreten einer unzulässigen Temperaturerhöhung in der Dampfleitung 01 den Schnellschluß auslösen kann. Ein Manometer 9 und ein Thermometer 10 dienen zur Anzeige des Dampfdrucks und der Dampftemperatur.

In der Kondensatleitung 02 liegt eine Kondensatpumpe 11 der druckseitig ein motorbetriebenes elektrisches Regelventil 12 nachgeschaltet ist, das über einen Rückflußverhinderer 13 an die Kondensatrückführleitung 012 angeschlossen ist.

Das kondensatseitige Regelventil 12 wird von einem Regler 13, dem über Temperaturferngeber 7, 15. in der Dampfleitung 01 und in der Vorlaufleitung 04 für die Dampftemperatur und die Vorlauftemperatur kennzeichnende Signale zugeleitet werden, in an sich bekannter Weise beeinflußt. Es regelt den Kondensatabfluß von dem Wärmetauscher 1 zu der Kondensatrückführleitung 012 und damit den Kondensatanstau in dem Wärmetauscher 1 entsprechend dem Wärmeverbrauch auf der Sekundärseite des Wärmetauschers 1. Bei null Wärmebedarf ist das Regelventil 12 geschlossen; die Wärmeaustauschfläche des Wärmetauschers 1 ist 100%ig mit Kondensat überflutet. Ein bei 16 angedeuteter Sollwerteinsteller erlaubt es, den Sollwert der Temperatur auf der Sekundärseite des Wärmetauschers 1 zweckentsprechend einzustellen.

Eine Niveauelektrode 14 überwacht den maximalen Kondensatstand und wirkt auf das Kondensatregelventil 12; diese Elektrode verhindert, daß Kondensat in die waagerechte Dampfleitung 01 gelangt, was beim Anfahren der Anlage zu Dampfschlägen führen könnte.

Zwischen dem Kondensatboden 2 des Wärmetauschers 1 und der Saugseite der Kondensatpumpe 11 liegt in der Kondensatleitung 02 ein als Magnetventil ausgebildetes Absperrventil 17, das von der Steuer- und Überwachungseinrichtung 8 angesteuert werden kann. Ihm ist ein die maximale Durchflußmenge begrenzendes verstellbares Drosselventil 18 vorgeschaltet; in Durchflußrichtung hinter ihm liegen ein Handabsperrventil 19 und ein Rückflußverhinderer 20, der mit einem Einspritzkühler 21 verbunden ist, welcher seinerseits an die Saugseite der Kondensatpumpe 11 angeschlossen ist. Eine ein einstellbares Drosselventil 22 enthaltende Bypass-Leitung 23 erlaubt es, einen Teil des in dem Wärmetauscher 1 anfallenden Kondensats unmittelbar von dem Kondensatboden 2 zur Saugseite der Kondensatpumpe 11 zu leiten.

Der Einspritzkühler 21 bildet einen Teil einer Zuleitungseinrichtung für Entwässerungskondensat, das in der Ferndampfleitung 010 anfällt. Über ihn wird dieses Ferndampfleitungsentwässerungskondensat ersichtlich an einer zwischen dem Wärmetauscher 1 und der Saugseite der Kondensatpumpe 11 liegenden Stelle unmittelbar in die Kondensatleitung 02 eingespeist. Zu diesem Zwecke ist an den Einspritzkühler 21 eine Kondensatrückführleitung 24 angeschlossen, die einen Rückflußverhinderer 25 und ein einstellbares Kondensatdrosselventil 26 sowie ein als Magnetventil ausgebildetes Kondensventil 27 enthält, das von der Steuer- und Überwachungseinrichtung 8 angesteuert werden kann. Zwischen dem Kondensventil 27 und der Ferndampfleitung 010 liegen ein Kondensatableiter 28 und ein Niveauschalter 29, der der Steuer- und Überwachungseinrichtung 8 jeweils ein Signal zuliefert, wenn das sich in dem Kondensatableiter 28 ansammelnde Ferndampfleitungsentwässerungskondensat eine bestimmte Menge, d.h. ein bestimmtes Niveau überschreitet und deshalb die Ferndampfleitung 010 entwässert werden muß. Außerdem zeigt er der Steuer- und überwachungsrichtung 8 durch Abgabe eines entsprechendes Signales an, wenn im Zuge der Entwässerung der Ferndampfleitung 010 ein vorbestimmtes Minimalniveau erreicht ist und der Entwässerungsvorgang deshalb abgeschlossen ist. Der Druck und die Temperatur des über die Kondensatrückführleitung 24 rückströmenden Ferndampfleitungsentwässerungskondensats werden durch ein Manometer 30 und ein Thermometer 31 überwacht; ein in der Kondensatleitung 02 unmittelbar vor der Kondensatrückführleitung 012 vorgesehenes Manometer 32 und ein diesem zugeordnetes Thermometer 33 erlauben gleichzeitig die Überwachung von Druck und Temperatur des in das Kondensatnetz zurückgespeisten Kondensats.

Üblicherweise wird dabei das anfallende Ferndampfleitungsentwässerungskondensat über eine vergrößerte Rohrleitung (größeres Volumen) gesammelt und mittels des Niveauschalters 29 niveaugesteuert abgeführt.

Auf der Sekundärseite des Wärmetauschers schließlich sind noch ein Sicherheitsventil 34 und ein von Hand einstellbares Drosselventil 35 in der Vorlaufleitung 04 vorgesehen, während Thermostate 36, 37 und ein Druckgeber 38 in der Vorlaufleitung 04 entsprechende Signale für die Steuer- und Überwachungseinrichtung 8 liefern, der über einen Thermostaten 39 in der Kondensatleitung 02 auch ein Überwachungssignal für die Kondensattemperatur am Ausgang des Wärmetauschers 1 übermittelt wird.

Zur Überwachung und Anzeige der für den Betriebszustand der Anlage kennzeichnenden Größe sind schließlich noch bei 40 angedeutete Anzeigegeräte für Druck- und Temperaturwerte vorgesehen.

Die insoweit beschriebene Dampf-Wärmeübergabestation arbeitet wie folgt:
Im Normalbetrieb, ohne Entwässerung der Ferndampfleitung 010, ist das Kondensatventil 27 geschlossen, so daß die Zuleitung von Ferndampfleitungsentwässerungskondensat in die Kondensatleitung 02 abgesperrt ist. Das in der Kondensatleitung 02 liegende Absperrventil 17 ist geöffnet. Die Kondensatpumpe 11 fördert das in dem Wärmetauscher 1 primärseitig anfallende Kondensat über das ebenfalls geöffnete kondensatseitige Regelventil 12 in die Kondensatrückführleitung 012. Die Ventilstellung des Regelventiles 12 wird von dem Regler 13 in Abhängigkeit von dem Wärmeverbrauch auf der Sekundärseite des Wärmetauschers bestimmt. In dem Wärmetauscher 1 wird auf diese Weise eine dem Wärmeverbrauch entsprechende Überflutung der Wärmeübertragungsfläche durch Kondensatanstau eingeregelt.

In dem Falle, daß auf der Sekundärseite des Wärmetauschers 1 null Wärmebedarf auftritt, schließt das Regelventil 12, d.h. der Wärmetauscher 1 ist zu 100% überflutet. Die Kondensatpumpe 11 wird abgeschaltet.

Bei Wiederaufnahme der Wärmeabgabe öffnet sich das Regelventil 12 wieder entsprechend, wobei grundsätzlich die Kondensatpumpe 11 von der Steuer- und Überwachungseinrichtung 8 erst dann freigegeben wird, wenn das Regelventil 12 seine Öffnungsbewegung begonnen hat.

Bei sehr niedrigen Dampfdrücken ist in dem Wärmetauscher 1 eine Thermo-Niveau-Erfassung für das Kondensat in dem Kondensatboden 2 vorgesehen.

Wenn der Niveauschalter 29 der Steuer- und Überwachungseinrichtung meldet, daß sich soviel Ferndampfleitungsentwässerungskondensat angesammelt hat, daß die Ferndampfleitung 010 entwässert werden muß, veranlaßt die Steuer- und Überwachungseinrichtung 8, daß das Kondensatventil 27 geöffnet wird. Findet zu diesem Zeitpunkt eine kondensatseitige Regelung des Wärmetauschers 1 statt, so ist die Ventilstellung des Regelventils 12 größer als null %. Durch einen Endschalter in dem Regelventil 12 ist sichergestellt, daß das Absperrventil 17 in der Kondensatleitung 02 dabei immer geöffnet ist.

Das Ferndampfleitungsentwässerungskondensat wird nunmehr über den Einspritzkühler 21 unmittelbar auf der Saugseite der Kondensatpumpe 11 zugeleitet und von dieser gemeinsam mit dem aus dem Wärmetauscher 1 zuströmenden Kondensat in die Kondensatrückführleitung 012 zurückgefördert. Der Einspritzkühler 21 kühlt dabei das Ferndampfleitungsentwässerungskondensat soweit herunter, daß Dampfschläge sicher vermieden sind.

Sowie der Niveauschalter 29 das Erreichen des minimalen Kondensatstandes meldet, wird das Kondensatventil 27 von der Steuer- und Überwachungseinrichtung 8 geschlossen.

Löst jedoch der Niveauschalter 29 eine Entwässerung der Ferndampfleitung 010 zu einem Zeitpunkt aus, zu dem an dem Wärmetauscher 1 null Wärmebedarf herrscht, so veranlaßt die Steuer- und Überwachungseinrichtung 8, daß gleichzeitig mit dem Öffnen des Kondensatventiles 27 das Absperrventil 17 geschlossen wird, während das Kondensatregelventil 12 geöffnet wird. Die Kondensatpumpe 11 fördert damit lediglich das ihr über den Einspritzkühler 21 zuströmende Ferndampfleitungsentwässerungskondensat in die Kondensatrückführleitung 012, während der Wärmetauscher 2 kondensatseitig durch das Absperrventil 17 gegen die Saugseite der Kondensatpumpe 11 im wesentlichen abgesperrt ist. Die über die Bypassleitung 23 und das Drosselventil 22 angesaugte Kondensatmenge ist null oder unbeachtlich klein.

Ist die Entwässerung der Ferndampfleitung 010 abgeschlossen, so gibt der Niveauschalter 29 bei Erreichen des minimalen Kondensatstandes ein Signal auf die Steuer- und Überwachungseinrichtung 8,mit der Folge, daß diese veranlaßt, daß das Kondensatventil 27 geschlossen und das Absperrventil 17 geöffnet werden, während das kondensatseitige Regelventil 12 geschlossen und die Kondensatpumpe 11 abgeschaltet werden. Die Dampf-Wärmeübergabestation ist damit wieder im Bereitschaftszustand für die Wiederaufnahme der kondensatseitigen Regelung des Wärmetauschers 1 bei erneutem Wärmebedarf auf der Sekundärseite des Wärmetauschers 1.

Der Kondensatableiter 28 dient nur noch als Sicherheitseinrichtung. Über die Kondensatdrosselventile 18, 26 werden die jeweils maximal zulässigen Kondensatdurchströmmengen eingestellt.

Die abgewandelte Ausführungsform einer Dampf-Wärmeübergabestation nach Fig. 2 unterscheidet sich von jener nach Fig. 1 lediglich dadurch, daß der Einspritzkühler 21 durch einen Gegenstrom-Wärmeübertrager 41 in der sekundärseitigen Rücklaufleitung 03 des Wärmetauschers 1 ersetzt ist. Die Bypassleitung 23 mit dem Drosselventil 22 ist hier weggelassen.

Der Aufbau und die Funktion der Dampf-Wärmeübergabestation, auch im Falle der Ferndampfleitungsentwässerung, sind gleich wie bei der Ausführungsform nach Fig. 1; sie sind deshalb nicht nochmals erläutert. Gleiche Teile sind mit gleichen Bezugszeichen versehen.

Bei der Ausführungsform nach Fig. 2 ist außerdem noch in der Kondensatleitung 02 hinter dem Rückflußverhinderer 20 ein bei 42 angedeuteter Kondensatmengenzähler vorgesehen, der es gestattet, die Menge des von dem Wärmetauscher 1 kondensatseitig abströmenden Kondensats zu erfassen. Gemeinsam mit der über einen nachgeschalteten Temperatur-Ferngeber 43 gemessenen Kondensattemperatur kann daraus die von dem Wärmeverbraucher aus dem Wärmetauscher 1 bezogene Wärmemenge berechnet werden. Da das Ferndampfleitungsentwässerungskondensat über die Leitung 24 unmittelbar auf die Saugseite der Kondensatpumpe 11 geleitet wird, kann es das Meßergebnis an dem Kondensatmengenzähler 42 nicht beeinflussen.

Der Gegenstrom-Wärmeübertrager 41 erlaubt es, die in dem Ferndampfleitungsentwässerungskondensat enthaltene Wärmemenge weitgehend auszunutzen. Er erhöht deshalb die Wirtschaftlichkeit der ganzen Station.

Das im Vorstehenden erläuterte Verfahren zur Rückführung des Ferndampfleitungsentwässerungskondensats in die gemeinsame Kondensatrückführleitung 012 kann noch dadurch erweitert werden, daß die Druckdifferenz zwischen dem Dampfdruck an der Ferndampfleitung 010 und dem Kondensatgegendruck an der Kondensatrückführleitung 012 zur Kondensatrückförderung ausgenutzt wird. Zu diesen Zweck werden über Druckferngeber 44, 45 dem Dampfdruck und dem Kondensatgegendruck entsprechende Signale auf die Steuer- und Überwachungseinrichtung 8 gegeben, die daraus die Druckdifferenz berechnet. Ist diese Druckdifferenz positiv, d.h. ist der Dampfdruck größer als der Kondensatgegendruck, so wird die Kondensatpumpe 11 nicht eingeschaltet, während das jeweilige Kondensat aus dem Wärmetauscher 1 und aus der Ferndampfleitung 010 mittels Dampfdruck in die gemeinsame Kondensatrückführleitung zurückgefördert wird. Dazu wird das sonst geschlossen gehaltene Kondensatventil 27 während der zur Entwässerung der Ferndampfleitung 010 erforderlichen Zeit geöffnet. Die Drosselventile 18, 22 und 26 sind derart eingestellt, daß die Kondensatrückförderung sowohl aus dem Wärmetauscher 1 als auch aus der Ferndampfleitung 010 jeweils problemlos vonstatten geht.

## Patentansprüche

1. Verfahren zur Rückführung des Ferndampfleitungsentwässerungskondensats bei Dampf-Wärmeübergabestationen, mit einem auf seiner Primärseite dampfseitig an eine Ferndampfleitung angeschlossenen kondensatseitig geregelten Wärmetauscher, dem kondensatseitig eine das in dem Wärmetauscher anfallende und das Ferndampfleitungsentwässerungskondensat zurückfördende Kondensatpumpe zugeordnet ist, dadurch gekennzeichnet, daß das Ferndampfleitungsentwässerungskondensat der Kondensatpumpe saugseitig an einer zwischen dem Wärmetauscher Und der Kondensatpumpe liegenden Stelle gesteuert zeitweilig zugeleitet wird und daß zumindest bei fehlender senkundärseitiger Wärmeabnahme von dem Wärmetauscher die Zuleitung von Ferndampfleitungsentwässerungskondensat bei von der Kondensatpumpe abgesperrter Kondensatseite des Wärmetauschers erfolgt.

2. Verfahren nach Anspruch 1, dadurch gekennzeichnet, daß während der Rückförderung von in dem Wärmetauscher anfallendem Kondensat die Zuleitung von Ferndampfleitungsentwässerungskondensat zu der Saugseite der Kondensatpumpe unterbrochen ist.

3. Verfahren nach Anspruch 1 oder 2, dadurch gekennzeichnet, daß das Ferndampfleitungsentwässerungskondensat zeitweilig gespeichert wird, bevor es der Saugseite der Kondensatseite zugeleitet wird.

4. Verfahren nach einem der vorhergehenden Ansprüche, dadurch gekennzeichnet, daß die Menge des in dem Wärmetauscher anfallenden Kondensats auf der Kondensatseite des Wärmetauschers vor der Zuleitung des Ferndampfleitungsentwässerungskondensats gemessen wird.

5. Verfahren nach einem der vorhergehenden Ansprüche, dadurch gekennzeichnet, daß das Ferndampfleitungsentwässerungskondensat vor der Zuleitung zu der Saugseite der Kondensatpumpe gekühlt wird.

6. Verfahren nach Anspruch 5, dadurch gekennzeichnet, daß von dem Ferndampfleitungsentwässerungskondensat Wärme auf den sekundärseitigen Rücklauf des Wärmetauschers übertragen wird.

7. Verfahren nach einem der vorhergehenden Ansprüche, dadurch gekennzeichnet, daß auf der Primärseite des Wärmetauschers die Druckdifferenz zwischen dem Dampfdruck und dem Kondensatgegendruck gemessen wird, und daß bei positiver Druckdifferenz die Rückförderung des Kondensats mittels des Dampfdruckes bei unwirksamer Kondensatpumpe erfolgt.

8. Dampf-Wärmeübergabestation mit einem mit seiner Primärseite an eine Ferndampfleitung (010) angeschlossenen kondensatseitig geregelten Wärmetauscher (1), dessen Kondensatseite über zumindest ein Regelventil (17) und eine Kondensatpumpe (11) mit einer Kondensatrückführleitung (012) verbunden ist sowie mit einer Zuleitungseinrichtung (24) zum Zuführen von in der Ferndampfleitung (010) anfallendem Ferndampfleitungsentwässerungskondensat zu der Saugseite der Kondensatpumpe (11), dadurch gekennzeichnet, daß die Kondensatpumpe (11) saugseitig mit der Kondensatseite (2) des Wärmetauschers (1) über gesteuerte erste Absperrmittel (17) verbunden ist, daß die Zuleitungseinrichtung für das Ferndampfleitungsentwässerungskondensat zwischen den ersten Absperrmitteln (17) und der Kondensatpumpe (11) auf deren Saugseite mündet und gesteuerte zweite Absperrmittel (27) enthält, und daß die ersten und die zweiten Absperrmittel (18; 27) mit einer Steuereinrichtung (8) verbunden sind, durch die zumindest bei fehlender sekundärer Wärmeabnahme von dem Wärmetauscher (1) die ersten Absperrmittel (17) bei geöffneten zweiten Absperrmitteln (27) geschlossen gehalten sind.

9. Übergabestation nach Anspruch 8, dadurch gekennzeichnet, daß bei Wärmeabnahme auf der Sekundärseite des Wärmetauschers (1) und deshalb geöffneten ersten Absperrmitteln (17) sowie gleichzeitig geöffnetem kondensatseitigem Regelventil (12) die zweiten Absperrmittel (27) zeitweilig geöffnet sind.

10. Übergabestation nach Anspruch 8, dadurch gekennzeichnet, daß bei Wärmeentnahme auf der Sekundärseite des Wärmetauschers (1) und deshalb geöffneten ersten Absperrmitteln (17) sowie gleichzeitig geöffnetem kondensatseitigem Regelventil (12) die zweiten Absperrmittel (27) geschlossen sind.

11. Übergabestation nach einem der Ansprüche 8 bis 10, dadurch gekennzeichnet, daß die Zuleitungseinrichtung für das Ferndampfleitungsentwässerungskondensat Mittel zur Kondensatspeicherung (28) enthält, denen ein ein Steuersignal für die Steuereinrichtung (8) abgebender Niveausensor (29) zugeordnet ist.

12. Übergabestation nach einem der Ansprüche 8 bis 11, dadurch gekennzeichnet, daß den ersten und/oder zweiten Absperrmitteln (17; 27) Durchflußmengenbegrenzungsmittel (18, 26) zugeordnet sind.

13. Übergabestation nach einem der Ansprüche 8 bis 12, dadurch gekennzeichnet, daß zwischen der Kondensatseite des Wärmetauschers (1) und der Mündung der Zuleitungseinrichtung für das Ferndampfleitungsentwässerungskondensat eine Durchflußmengenmeßeinrichtung (42) für das in dem Wärmetauscher (1) anfallende Kondensat angeordnet ist.

14. Übergabestation nach einem der vorhergehenden Ansprüche, dadurch gekennzeichnet, daß die Zuleitungseinrichtung für das Ferndampfleitungsentwässerungskondensat Mittel (21, 41) zur Kühlung des Kondensats enthält.

15. Übergabestation nach Anspruch 14, dadurch gekennzeichnet, daß die Mittel zur Kondensatkühlung einen Einspritzkühler (21) enthalten.

16. Übergabestation nach Anspruch 14, dadurch gekennzeichnet, daß die Mittel zur Kondensatkühlung einen primärseitig von dem Ferndampfleitungsentwässerungskondensat durchströmten Wärmeübertrager (41) enthalten, der sekundärseitig in einer Rücklaufleitung (03) auf der Sekundärseite des Wärmetauschers (1) liegt.

17. Übergabestation nach einem der Ansprüche 8 bis 16, dadurch gekennzeichnet, daß sie auf der Primärseite des Wärmetauschers (1) eine Meßeinrichtung (44, 45) für die Druckdifferenz zwischen dem Dampfdruck und dem Kondensatgegendruck aufweist, die ein für den Differenzdruck kennzeichnendes Signal an die Steuereinrichtung (8) abgibt, unter dessen Einwirkung die Steuereinrichtung die Kondensatpumpe (11) bei geöffneten ersten und/oder zweiten Absperrmitteln (17; 27) zumindest während eines Teiles der durch den Dampfdruck erfolgenden Kondensatrückförderung im abgeschalteten Zustand hält.

## Claims

1. Process for returning dewatering condensate of the long-distance steam pipeline in a steam heat exchange station including a heat exchanger connected on its primary side to the steam side of a long-distance steam pipeline and controlled on the condensate side, said heat exchanger having allocated thereto on its condensate side a condensate pump for returning the condensate accumulating in the heat exchanger and the long-distance steam pipeline dewatering condensate, characterized in that the long-distance steam pipeline dewatering condensate is temporarily supplied in a controlled manner on its suction side to the condensate pump at a location between the heat exchanger and the condensate pumpe, and that, at least in the absence of any heat take-off from the heat exchanger on the secondary side thereof, the long-distance steam pipeline dewatering condensate is supplied while the condensate side of the heat exchanger is shut off from the condensate pump.

2. Process as claimed in Claim 1, characterized in that during the return of condensate accumulating in the heat exchanger the supply of long-distance steam pipeline dewatering condensate to the suction side of the condensate pump is interrupted.

3. Process as claimed in Claim 1 or 2, characterized in that the long-distance steam pipeline dewatering condensate is temporarily stored until it is supplied to the suction side of the condensate side.

4. Process as claimed in any one of the preceding claims, characterized in that the amount of condensate accumulating in the heat exchanger on the condensate side of the heat exchanger is measured prior to the supply of the long-distance steam pipeline dewatering condensate.

5. Process as claimed in any one of the preceding claims, characterized in that the long-distance steam pipeline dewatering condensate is cooled prior to its supply to the suction side of the condensate pump.

6. Process as claimed in Claim 5, characterized in that heat from the long-distance steam pipeline dewatering condensate is transferred to the secondary-side return line of the heat exchanger.

7. Process as claimed in any one of the preceding claims, characterized in that the pressure differential between the steam pressure and the condensate counter-pressure is measured on the primary side of the heat exchanger, and that in the case of a positive pressure differential the condensate is returned by means of the steam pressure with with condensate pump being ineffective.

8. Steam heat exchange station having a heat exchanger (1) connected on its primary side to a long-distance steam pipeline (010) and being controlled on its condensate side, the condensate side of said heat exchanger being in communication via at least one control valve (17) and one condensate pump (11) with a condensate return line (012) and with supply means (24) for supplying long-distance steam pipeline dewatering condensate accumulating in the long-distance steam pipeline to the suction side of the condensate pump (11), characterized in that the condensate pump (11) is in communication on its suction side with the condensate side (2) of the heat exchanger (1) via controlled first shut-off means (17), that the supply means for the long-distance steam pipeline dewatering condensate discharge between the first shut-off means (17) and the condensate pumpe (11) on the suction side thereof and include controlled second shut-off means (27), and that the first and the second shut-off means (18; 27) are in communication with a controller (8) by which, at least in the absence of any secondary heat take-off from the heat exchanger (1), the first shut-off means (17) are kept closed while the second shut-off means (27) are open.

9. Heat exchange station as claimed in Claim 8, characterized in that during heat take-off on the secondary side of the heat exchanger (1), hence with open first shut-off means (17) and at the same time with open control valve (12) on the condensate side, the second shut-off means (27) are temporarily open.

10. Heat exchange station as claimed in Claim 8, characterized in that during heat take-off on the secondary side of the heat exchanger (1), hence with open first shut-off means (17) and at the same time with open control valve (12) on the condensate side, the second shut-off means (27) are closed.

11. Heat exchange station as claimed in any one of Claims 8 to 10, characterized in that the supply means for the long-distance steam pipeline dewatering condensate include condensate storage means (28), which have allocated thereto a level sensor (29) providing a control signal for the controller (8).

12. Heat exchange station as claimed in any one of Claims 8 to 11, characterized in that the first and/or second shut-off means (17; 27) have allocated thereto flow regulating means (18, 26).

13. Heat exchange station as claimed in any one of Claims 8 to 12, characterized in that flow measuring means (42) for measuring the condensate accumulating in the heat exchanger (1) are provided between the condensate side of the heat exchanger (1) and the port of the supply means for the long-distance steam pipeline dewatering condensate.

14. Heat exchange station as claimed in any one of the preceding claims, characterized in that the supply means for the long-distance steam pipeline dewatering condensate include means (21, 41) for cooling the condensate.

15. Heat exchange station as claimed in Claim 14, characterized in that the condensate cooling means include a spray cooler (21).

16. Heat exchange station as claimed in Claim 14, characterized in that the condensate cooling means include heat transfer means (41) through which flows on the primary side the long-distance steam pipeline dewatering condensate, said heat transfer means being inserted on their secondary side in a return line (03) on the secondary side of the heat exchanger (1).

17. Heat exchange station as claimed in any one of Claims 8 to 16, characterized in that it has on the primary side of the heat exchanger (1) measuring means (44, 45) for determining the pressure differential between the steam pressure and the condensate counter-pressure, said measuring means providing a signal characteristic of the pressure differential to the controller (8), under the influence of which signal the controller will keep the condensate pump (11), with the first and/or second shut-off means (17; 27) being open, in a switched-off state at least during part of the condensate return process taking place by means of the steam pressure.

## Revendications

1. Procédé de recyclage du condensat de purge de conduites de vapeur de réseaux de chaleur dans des sous-stations d'échange de chaleur à vapeur, comportant un échangeur de chaleur dont le côté primaire, côté vapeur, est connecté à une conduite de vapeur du réseau de chaleur et, côté condensat, est pourvu d'une régulation et auquel est associé, côté condensat, une pompe à condensat qui ramène le condensat produit dans l'échangeur et le condensat de purge des conduites de vapeur du réseau de chaleur, caractérisé par le fait que l'on amène de manière contrôlée et non permanente le condensat de purge des conduites de vapeur du réseau de chaleur côté aspiration de la pompe à condensat, en un point qui est situé entre l'échangeur de chaleur et ladite pompe à condensat, et par le fait que, au moins lorsqu'il n'y a pas de prélévement de chaleur côté secondaire de l'échangeur, l'amenée de condensat de purge des conduites de vapeur du réseau de chaleur a lieu alors que le côté condensat de l'échangeur de chaleur est isolé par rapport à la pompe.

2. Procédé selon la revendication 1, caractérisé par le fait que pendant le recyclage du condensat produit dans l'échangeur de chaleur on interrompt l'amenée du condensat de pure des conduites de vapeur du réseau de chaleur au côté aspiration de la pompe à condensat.

3. Procédé selon la revendication 1 ou la revendication 2, caractérisé par le fait que l'on stocke temporairement le condensat de purge des conduites de vapeur du réseau de chaleur avant d'amener celui-ci au côté aspiration de la pompe à condensat.

4. Procédé selon l'une des revendications précédentes caractérisé par le fait que l'on mesure la quantité de condensat produite dans l'échangeur de chaleur, côté condensat de l'échangeur de chaleur, avant l'amenée du condensat de pure des conduites de vapeur du réseau de chaleur.

5. Procédé selon l'une des revendications précédentes caractérisé par le fait que l'on refroidit le condensat de purge des conduites de vapeur du réseau de chaleur avant son amenée au côté aspiration de la pompe à condensat.

6. Procédé selon la revendication 5, caractérisé par le fait que la chaleur du condensat de purge des conduites de vapeur du réseau de chaleur est transmise au retour côte secondaire de l'échangeur de chaleur.

7. Procédé selon l'une des revendications précédentes, caractérisé par le fait que l'on mesure la différence entre la pression de la vapeur et la contre-pression du condensat côté primaire de l'échangeur de chaleur et par le fait qu'en cas de différence de pression positive, le retour du condensat est assuré par la pression de la vapeur, la pompe à condensat étant arrêtée.

8. Sous-station d'échange de chaleur à vapeur comportant un échangeur de chaleur (1) dont le côté primaire, côté vapeur, est connecté à une conduite de vapeur (010) du réseau de chaleur et, côté condensat, est pourvu d'une régulation, dont le côté condensat est relié à une conduite de retour de condensat (012) par l'intermédiaire d'au moins une vanne de réglage (12) et une pompe à condensat (11), ainsi qu'un dispositif d'amenée (24) pour amener au côté aspiration de la pompe à condensat (11) le condensat de purge produit dans les conduites de vapeur du réseau de chaleur, caractérisé par le fait que la pompe à condensat (11) est reliée côté aspiration au côté condensat (2) de l'échangeur de chaleur (1) par l'intermédiaire de premiers moyen d'isolement (17) commandés, par le fait que le dispositif d'amenée du condensat de purge produit dans les conduites de vapeur du réseau de chaleur débouche dans le côté aspiration de la pompe à condensat (11) entre les premiers moyens d'isolement (17) et ladite pompe à condensat (11) et comporte des deuxièmes moyens d'isolement (27) commandés et par le fait que les premiers et deuxièmes moyens d'isolement (17, 27) sont connectés à un dispositif de commande (8) par l'intermédiaire duquel, lorsqu'il n'y a pas de prélèvement de chaleur côté secondaire de l'échangeur (1), les premiers moyens d'isolement (17) sont maintenus fermés tandis que les deuxièmes moyens d'isolement (27) sont ouverts.

9. Sous-station d'échange de chaleur selon la revendication 8, caractérisée par le fait que lors d'un prélèvement de chaleur côté secondaire de l'échangeur de chaleur (1), donc lorsque les premiers moyens d'isolement (17) sont ouverts et que simultanément la vanne de réglage (12) côté condensat est ouverte, on ouvre temporairement les deuxièmes moyens d'isolement (27).

10. Sous-station d'échange de chaleur selon la revendication 8, caractérisée par le fait que lors d'un prélèvement de chaleur côté secondaire de l'échangeur de chaleur (1), donc lorsque les premiers moyens d'isolement (17) sont ouverts et que simultanément la vanne de réglage (12) côté condensat es ouverte, on ferme les deuxièmes moyens d'isolement (27).

11. Sous-station d'échange de chaleur selon d'une des revendications 8 à 10, caractérisée par le fait que le dispositif d'amenée pour le condensat de purge des conduites de vapeur du réseau de chaleur comprend des moyens de stockage (28) du condensat auxquels est associé un détecteur de niveau (29) qui délivre un signal de commande pour le dispositif de commande (8).

12. Sous-station d'échange de chaleur selon l'une des revendications 8 à 11, caractérisée par le fait que des moyens de limitation de débit (18, 26) sont associés aux premiers et/ou aux deuxièmes moyens d'isolement (17, 27).

13. Sous-station d'échange de chaleur selon l'une des revendications 8 à 12, caractérisé par le fait qu'un dispositif de mesure de débit (42) pour le condensat produit dans l'échangeur de chaleur (1) est disposé entre le côté condensat dudit échangeur de chaleur (1) et l'embouchure du dispositif d'amenée pour le condensat de purge des conduites de vapeur du réseau de chaleur.

14. Sous-station d'échange de chaleur selon l'une des revendications précédentes, caractérisé par le fait que le dispositif d'amenée pour le condensat de purge des conduites de vapeur du réseau de chaleur comporte des moyens (21, 41) pour refroidir le condensat.

15. Sous-station d'échange de chaleur selon la revendication 14, caractérisée par le fait que les moyens de refroidissement du condensat comprennent un réfoidisseur à pulvérisation d'eau (21).

16. Sous-station d'échange de chaleur selon la revendication 14, caractérisée par le fait que les moyens de refroidissement du condensat comprennent un échangeur de chaleur (41) qui est traversé côté primaire par le condensat de purge des conduites de vapeur du réseau de chaleur et dont le côté secondaire est intercalé dans une conduite de retour (03) côté secondaire de l'échangeur de chaleur (1).

17. Sous-station d'échange de chaleur selon l'une des revendications 8 à 16, caractérisée par le fait qu'elle comporte côté primaire de l'échangeur de chaleur (1) un dispositif de mesure (44, 45) de la différence de pression entre la pression de la vapeur et la contre-pression du condensat, lequel dispositif délivre au dispositif de commande (8) un signal caractéristique de la différence de pression qui, lorsque les premiers et/ou seconds moyens d'isolement (17, 27) sont ouverts, maintient hors service la pompe à condensat (11) pendant au moins une partie du retour des condensats opéré par la pression de la vapeur.
